# EUROPEAN PATENT SPECIFICATION

(11) **EP 0 431 815 B1**
(45) Date of publication and mention of the grant of the patent: **09.04.1997**
(21) Application number: 90312869.2
(22) Date of filing: 27.11.1990
(51) Int. Cl.: F42B 39/20, F16K 15/14

(54) **Venting and sealing mechanism**
Lüftungs- und Abdichtungsgegenstand
Dispositif d'aération et d'étanchéité

(30) Priority: 06.12.1989 US 446738
(43) Date of publication of application: 12.06.1991
(73) Proprietor: RAYTHEON COMPANY, Lexington Massachusetts 02173 (US)
(72) Inventor: Diprima, James J., Medford, Massachusetts (US); Porter, Frank K., Jr., Billerica Massachusetts (US)
(74) Representative: Jackson, David Spence

(56) References cited:
- US-A- 3 020 926
- US-A- 3 270 771
- US-A- 3 851 588
- US-A- 4 300 451
- US-A- 4 324 097

## Description

This invention pertains generally to guided missiles, and particularly to apparatus and method for controlling the temperature within such missiles during flight.

Aerodynamically induced heating during flight may seriously reduce the performance of any known types of guidance apparatus in guided missiles (hereinafter referred to simply as "missiles"). The problems associated with aerodynamically induced heating are exacerbated when the barometric pressure of air within the guidance section of a missile is not appropriately adjusted with any change in altitude of a missile. As altitude increases during flight it is desirable to vent the guidance section of a missile so that the barometric pressure within the guidance section is lowered to correspond to the barometric pressure of the enveloping atmosphere. As altitude decreases during flight it is desirable to prevent the barometric pressure within the guidance section from being increased to correspond with the enveloping barometric pressure.

Any satisfactory method or mechanism used to control the barometric pressure within the guidance section of a missile may not detract in any way from the electrical or mechanical characteristics of any part of a missile. Care must be taken not to affect the streamlining of the missile and not to allow electromagnetic or radio frequency interference with the operation of any elements in the guidance section.

US-A-3851588 describes a pyrotechnic store, which may be a rocket, comprising a casing containing a pyrotechnic device, the casing being an integral part of the store and serving to contain the device when it is fired. The casing contains chemical compositions which give off gaseous products during storage, but is provided with a non-return valve which permits gas to flow out of the casing but substantially prevents any gas or liquid from flowing into the casing. The casing is otherwise air-tight. The non-return valve consists of a resilient plug having a domed or mushroom shaped head, a circular-cylindrical stem, and a frusto-conical base tapering away from the middle of the plug, and a triangular aperture in the casing. The stem is located in the aperture and is of such a length that, when the barometric pressures inside and outside the casing are equal, an annular face of the base is held against the inner surface of the casing as a result of the rim of the head pressing on the outer surface of the casing. The corners of the triangular aperture are not obstructed by the base, and therefore there are passages through which gas can flow from within the casing to the space beneath the head. The rim of the head is in contact with the casing beyond the corners of the aperture unless the pressure of the gas within the casing exceeds the pressure outside the plug and casing sufficiently for the rim of the head to be lifted at least partly away from the casing. Thus excess gas pressure can be relieved.

According to one spect of the present invention there is provided a guided missile having:
a shell with a space enclosed thereby wherein a guidance apparatus is mounted; and
means for reducing aerodynamically induced heating of the missile, the said means comprising a valve, responsive to a difference of pressure between pressure within the space and pressure of an atmosphere surrounding the missile, for venting air having a barometric pressure within the space from said space to the atmosphere surrounding the missile when the barometric pressure of said air within the space is greater than the barometric pressure of air in the atmosphere surrounding the missile and for preventing air in the atmosphere from entering the space when the barometric pressure of the air within the space is less than the barometric pressure of air of the atmosphere.

According to another aspect of the invention there is provided a method of reducing aerodynamically induced heating of a guided missile comprising the steps of:
allowing air having a barometric pressure within a guidance section of the missile to be vented to the atmosphere whenever the barometric pressure of the air within the guidance section of the missile is greater than the barometric pressure of the atmosphere; and
preventing air from the atmosphere from being admitted to the guidance section whenever the barometric pressure of the air within the guidance section of the missile is less than the barometric pressure of the atmosphere.

Thus this invention provides a venting and sealing mechanism for the guidance section of a guided missile in flight, such mechanism being adapted to respond to the difference between the barometric pressures inside and outside a missile in flight to vent or to seal the guidance section as required to maintain the optimum barometric pressure within the guidance section.

A preferred embodiment of this invention is in the form of a venting and sealing mechanism that is mounted on a guided missile in such a way that the integrity of the streamlining of the missile is preserved.

Preferably also the venting and sealing mechanism is effective to prevent radio frequency interference with elements in the guidance section of the missile and to inhibit unwanted emission of radio frequency energy from such section.

A preferred embodiment of this invention generally comprises a valve between the guidance section and the outside of the missile, the valve being made up of a metallic hollow cylindrical cup with a perforate bottom and an open top affixed to the inside of the skin of a missile so that air may pass from the guidance section to the atmosphere, or vice versa, and a pressure-sensitive plug disposed between the skin of the missile and the perforate bottom of the cup, such plug being out of contact with the perforate bottom when venting of the air in the guidance section is required and in contact with the perforate bottom when sealing of the air in the guidance section is required.

The invention will now be described by way of example with reference to the accompanying drawings, in which:-
Fig. 1 is a perspective view, greatly simplified, of a venting and sealing mechanism embodying the invention in place in a guided missile; and
Fig. 2 is a simplified axial cross-sectional view of a venting and sealing mechanism as used in Fig. 1.

### Description of the Preferred Embodiment

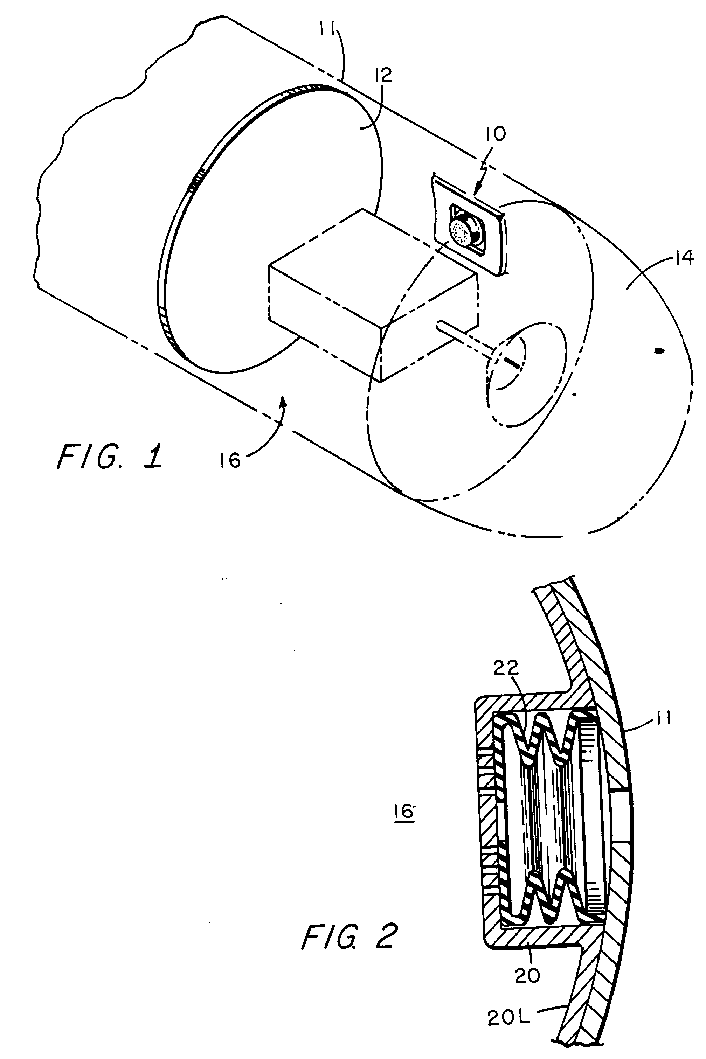

Referring now to Figs. 1 and 2, it may be seen that the contemplated venting and sealing mechanism 10 is mounted in an appropriately shaped opening in the shell 11 of a missile (not numbered). The portion of the shell 11 adjacent to the venting and sealing mechanism 10, a bulkhead 12 and a radome 14 encompass a space hereinafter referred to as the guidance section 16. Conventional seeker and guidance command apparatus (not numbered) is mounted within the guidance section 16. The venting and sealing mechanism 10 is arranged: (a) to allow air within the guidance section 16 to be vented to the atmosphere whenever the altitude of the missile (not numbered) increases; and (b) to prevent air from the atmosphere from being admitted to the guidance section 16 whenever the altitude of the missile (not numbered) decreases.

The venting and sealing mechanism 10 here is made up of: (a) a metallic cup 20 having a perforate bottom and an open end (with a lip 20L integrally formed around the open end so that the cup 20 may be affixed in any convenient manner to cover an opening (not numbered) in the shell 11; and (b) a pressure-sensitive plug 22 having an annular end shaped to cover the openings in the perforate bottom of the cup 20. The individual openings in the perforate bottom of the cup 20 are proportioned so that the bottom is always substantially opaque to electromagnetic energy at the frequency of operation of the seeker and guidance command apparatus. Further, the individual openings through the bottom of the cup 20 are disposed toward the perimeter of the bottom of the cup 20 so that when the annular end of the plug 22 is in contact with the bottom of the cup 20, i.e., when the barometric pressure of the atmosphere is substantially greater than the barometric pressure in the guidance section 16, the openings in the bottom of the cup 20 are covered.

The annular end of the plug 22 is integrally formed with a bellows (not numbered) that is disposed as shown to bear against the inside of the shell 11 of the missile. The plug 22 is fabricated from an elastometer and is so dimensioned that, so long as the barometric pressure of the atmosphere outside the missile 10 is equal to, or greater than, the barometric pressure of the air within the guidance section 16, the annular end is in contact with the perforate bottom of the cup 20 to seal the guidance section 16. However, when the barometric pressure of the atmosphere outside the missile is less than the barometric pressure of the air within the guidance section 16, the resulting imbalance in barometric pressures on the two sides of the annular end of the plug 22 causes the annular end to move away from the perforate bottom of the cup 20, thereby venting the air within the guidance section 16.

Having described a preferred embodiment of this invention, it will now be apparent to one of skill in the art that different embodiments of the invention may be made. For example, the bellows need not be incorporated in the plug 22 if the annular end is shaped and dimensioned so as to be movable. Further, as an alternative embodiment, a flapper valve could be installed on the skin of the missile to permit venting and to prevent ingress of any air from the atmosphere.

## Claims

1. A guided missile having:
a shell (11) with a space enclosed thereby wherein a guidance apparatus is mounted; and
means for reducing aerodynamically induced heating of the missile, the said means comprising a valve (10), responsive to a difference of pressure between pressure within the space and pressure of an atmosphere surrounding the missile, for venting air having a barometric pressure within the space from said space to the atmosphere surrounding the missile when the barometric pressure of said air within the space is greater than the barometric pressure of air in the atmosphere surrounding the missile and for preventing air in the atmosphere from entering the space when the barometric pressure of the air within the space is less than the barometric pressure of air of the atmosphere.

2. A guided missile according to claim 1, characterised in that the valve (10) has means (20) for rendering opaque said valve (10) to radio frequency energy utilized by the guidance apparatus.

3. A missile according to claim 2, characterised in that the valve (10) comprises:
a cup (20) having a perforate bottom portion and a side wall portion; and
a plug (22) slidably disposed within the cup (20), such plug (22) having an end portion engagable with the perforate bottom portion and a bellows, the bellows being disposed adjacent the sidewall portion, the perforate bottom portion of the cup (20) being disposed in contact with the end portion of the plug (22) when the barometric pressure of air in the atmosphere is equal to or greater than the barometric pressure of the air within the space and the perforated bottom portion of the cup (20) being displaced from the end portion of the plug (22) when the barometric pressure of air in the atmosphere is less than the barometric pressure of the air within the space.

4. A guided missile according to claim 1, characterised in that the valve comprises:
(i) a cup (20) fabricated from a metallic material, the cup (20) having a lip (20L) affixed to an inner surface of the shell (11) to encompass an opening formed through the shell (11) and having a perforate bottom with individual holes adjacent to the space within the missile wherein the individual holes in the perforate bottom of the cup (20) have transverse dimensions to render the perforate bottom opaque to radio frequency energy utilized by the guidance apparatus;
(ii) a plug, fabricated from an elastometer and movably mounted within the cup (20), the plug having an annular end adapted to cover the individual holes in the perforate bottom; and
(iii) a bellows having a first end and a second end, the first end of the bellows affixed to the plug and the second end of the bellows disposed adjacent the inner surface of the shell (11) within the lip (20L) of the cup (20).

5. A method of reducing aerodynamically induced heating of a guided missile comprising the steps of:
allowing air having a barometric pressure within a guidance section (16) of the missile to be vented to the atmosphere whenever the barometric pressure of the air within the guidance section (16) of the missile is greater than the barometric pressure of the atmosphere; and
preventing air from the atmosphere from being admitted to the guidance section (16) whenever the barometric pressure of the air within the guidance section of the missile is less than the barometric pressure of the atmosphere.

## Patentansprüche

1. Lenkflugkörper, enthaltend:
eine Hülle (11) mit einem von ihr umschlossenen Raum, in dem sich eine Lenkeinrichtung befindet; und
Mittel zur Verminderung der aerodynamisch induzierten Erwärmung des Flugkörpers, welche ein Ventil (10) enthalten, das auf einen Druckunterschied zwischen dem Druck innerhalb des Raums und dem Druck einer den Flugkörper umgebenden Atmosphäre anspricht, um Luft mit einem barometrischen Druck innerhalb des Raums von diesem Raum zu der den Flugkörper umgebenden Atmosphäre abzulassen, wenn der barometrische Druck der genannten Luft innerhalb des Raums größer als der barometrische Druck der Luft in der den Flugkörper umgebenden Atmosphäre ist, und um den Eintritt von Luft der Atmosphäre in den Raum zu verhindern, wenn der barometrische Druck der Luft innerhalb des Raums kleiner als der barometrische Druck der Luft der Atmosphäre ist.

2. Lenkflugkörper nach Anspruch 1, dadurch gekennzeichnet, daß das Ventil (10) Mittel (20) zum Undurchlässigmachen des genannten Ventils (10) für Hochfrequenzenergie aufweist, die von der Lenkeinrichtung verwendet wird.

3. Flugkörper nach Anspruch 2, dadurch gekennzeichnet, daß das Ventil (10) folgendes enthält:
ein becherförmiges Teil (20) mit einem perforierten Bodenabschnitt und einem Seitenwandabschnitt; und
einen in dem becherförmigen Teil (20) verschiebbar angeordneten Stopfen (22), der einen mit dem perforierten Bodenabschnitt in Berührung bringbaren Endabschnitt und einen Balg aufweist, der sich nahe dem Seitenwandabschnitt befindet, wobei der perforierte Bodenabschnitt des becherförmigen Teils (20) sich in Berührung mit dem Endabschnitt des Stopfens (22) befindet, wenn der barometrische Druck der Luft in der Atmosphäre gleich groß wie oder größer als der barometrische Druck der Luft innerhalb des Raums ist, und der perforierte Bodenabschnitt des becherförmigen Teils (20) von dem Endabschnitt des Stopfens (22) entfernt ist, wenn der barometrische Druck der Luft in der Atmosphäre kleiner als der barometrische Druck der Luft innerhalb des Raums ist.

4. Lenkflugkörper nach Anspruch 1, dadurch gekennzeichnet, daß das Ventil folgendes enthält:
(i) ein becherförmiges Teil (20), das aus metallischem Material gefertigt ist und einen Flansch (20L) aufweist, der an einer Innenfläche der Hülle (11) befestigt ist, so daß er eine sich durch die Hülle (11) erstreckende Öffnung umgibt, und das einen perforierten Boden mit einzelnen Öffnungen angrenzend an den Raum innerhalb des Flugkörpers hat, wobei die einzelnen Öffnungen in dem perforierten Boden des becherförmigen Teils (20) Querabmessungen aufweisen, die den perforierten Boden undurchlässig gegenüber Hochfrequenzenergie machen, welche von der Lenkeinrichtung verwendet wird;
(ii) einen aus einem Elastomer gefertigten Stopfen, der innerhalb des becherförmigen Teils (20) bewegbar angeordnet ist, wobei der Stopfen ein ringförmiges Ende aufweist, das so ausgebildet ist, daß es die einzelnen Öffnungen in dem perforierten Boden abdeckt; und
(iii) einen Balg mit einem ersten Ende und einem zweiten Ende, wobei das erste Ende des Balgs an dem Stopfen befestigt ist und das zweite Ende des Balgs nahe der Innenfläche der Hülle (11) innerhalb des Flansches (20L) des becherförmigen Teils (20) gelegen ist.

5. Verfahren zur Verminderung der aerodynamisch induzierten Erwärmung eines Lenkflugkörpers mit folgenden Schritten:
Zulassen einer Entlüftung von Luft mit einem barometrischen Druck innerhalb eines Lenkabschnitts des Flugkörpers zur Atmosphäre hin immer dann, wenn der barometrische Druck der Luft innerhalb des Lenkabschnitts (16) des Flugkörpers größer als der barometrische Druck der Atmosphäre ist; und
Verhindern eines Eintritts von Luft aus der Atmosphäre zu dem Lenkabschnitt (16) immer dann, wenn der barometrische Druck der Luft innerhalb des Lenkabschnitts des Flugkörpers kleiner als der barometrische Druck der Atmosphäre ist.

## Revendications

1. Missile guidé comportant :
une coque (11) renfermant un espace dans lequel est monté un dispositif de guidage ; et
des moyens pour réduire la chaleur induite de façon aérodynamique du missile, les moyens comprenant une vanne (10), sensible à la différence de pression entre la pression à l'intérieur de l'espace et la pression de l'atmosphère entourant le missile, pour décharger de l'air ayant une pression barométrique à l'intérieur de l'espace depuis cet espace vers l'atmosphère entourant le missile lorsque la pression barométrique de l'air à l'intérieur de l'espace est supérieure à la pression barométrique de l'air de l'atmosphère entourant le missile et pour empêcher l'air dans l'atmosphère d'entrer dans l'espace lorsque la pression barométrique de l'air à l'intérieur de l'espace est inférieure à la pression barométrique de l'air de l'atmosphère.

2. Missile guidé selon la revendication 1, caractérisé en ce que la vanne (10) comporte des moyens (20) pour rendre cette vanne (10) opaque à de l'énergie de fréquence radio utilisée par le dispositif de guidage.

3. Missile guidé selon la revendication 2, caractérisé en ce que la vanne (10) comprend :
une coupelle (20) comportant une partie de fond percé et une partie de paroi latérale ; et
un bouchon (22) disposé de façon coulissante dans la coupelle (20), ce bouchon (22) comportant une partie d'extrémité destinée à coopérer avec la partie de fond percé et des soufflets, les soufflets étant disposés au voisinage de la partie de paroi latérale, la partie de fond percé de la coupelle (20) étant placée en contact avec la partie d'extrémité du bouchon (22) lorsque la pression barométrique de l'air dans l'atmosphère est égale ou supérieure à la pression barométrique de l'air à l'intérieur de l'espace et la partie de fond percé de la coupelle (20) étant déplacée à partir de la partie d'extrémité du bouchon (22) lorsque la pression barométrique de l'air dans l'atmosphère est inférieure à la pression barométrique de l'air à l'intérieur de l'espace.

4. Missile guidé selon la revendication 1, caractérisé en ce que la vanne comprend :
(i) une coupelle (20) fabriquée à partir d'un matériau métallique, la coupelle (20) comportant une lèvre (20L) assujettie à une surface interne de la coque (11) pour entourer une ouverture formée à travers la coque (11) et comportant un fond percé muni de trous individuels voisins de l'espace à l'intérieur du missile dans lequel les trous individuels du fond percé de la coupelle (20) présentent des dimensions transversales permettant de rendre le fond percé opaque à de l'énergie de fréquence radio utilisée par le dispositif de guidage ;
(ii) un bouchon, fabriqué à partir d'élastomère est monté déplaçable dans la coupelle (20), le bouchon comportant une extrémité annulaire adaptée pour couvrir les trous individuels dans le fond percé; et
(iii) des soufflets comportant une première extrémité et une seconde extrémité, la première extrémité des soufflets étant assujettie au bouchon et la seconde extrémité des soufflets étant disposée au voisinage de la surface interne de la coque (11) à l'intérieur de la lèvre (20L) de la coupelle (20).

5. Procédé pour réduire la chaleur induite de façon aérodynamique d'un missile guidé comprenant les étapes consistant à :
permettre à de l'air ayant une pression barométrique à l'intérieur d'une section de guidage (16) du missile d'être déchargé dans l'atmosphère dès que la pression barométrique de l'air dans la section de guidage (16) du missile est supérieure à la pression barométrique de l'atmosphère ; et
empêcher l'air de l'atmosphère d'être admis dans la section de guidage (16) dès que la pression barométrique de l'air dans la section de guidage du missile est inférieure à la pression barométrique de l'atmosphère.
